# EUROPÄISCHE PATENTSCHRIFT

(11) **EP 0 985 320 B1**
(45) Veröffentlichungstag und Bekanntmachung des Hinweises auf die Patenterteilung: **29.08.2007**
(21) Anmeldenummer: 98919162.2
(22) Anmeldetag: 26.03.1998
(51) Int. Cl.: H04N 7/58, H04N 7/18

(54) **VORRICHTUNG ZUR MULTIPLEXIERUNG VON VIDEOSIGNALEN**
DEVICE FOR MULTIPLEXING VIDEO SIGNALS
DISPOSITIF DE MULTIPLEXAGE DE SIGNAUX VIDEOS

(43) Veröffentlichungstag der Anmeldung: 15.03.2000
(73) Patentinhaber: Earth View Television & Datatransfer GmbH, 80805 München (DE)
(72) Erfinder: WIEDENMANN, Henrike, Dorothea, D-81371 München (DE)
(74) Vertreter: Manitz, Finsterwald & Partner GbR
(86) Internationale Anmeldenummer: PCT/EP1998/001794
(87) Internationale Veröffentlichungsnummer: WO 1999/049665

(56) Entgegenhaltungen:
- EP-A- 0 425 834
- EP-A- 0 749 243
- WO-A-95/15655
- WO-A-95/35627
- WO-A-96/20568
- US-A- 5 371 535
- US-A- 5 509 013

## Beschreibung

Die Erfindung betrifft eine Vorrichtung zur Bereitstellung eines Video-Signals, dessen Qualität einer Bereitstellungs-Bitrate x entspricht.

Mit derartigen Vorrichtungen werden beispielsweise aus mehreren zeitlich unmittelbar aufeinanderfolgenden Bildsignalen zusammengesetzte Video-Signale erzeugt, wobei die einzelnen Bildsignale an unterschiedlichen geographischen Orten aufgenommen werden, um dann mit möglichst geringer zeitlicher Verzögerung gesendet zu werden. Dieses Prinzip wird beispielsweise eingesetzt, um eine Live-Wetterinformation von verschiedenen geographischen Orten zusammenzustellen, wobei das entsprechende Video-Signal aus sich zyklisch abwechselnden Bildsignalen besteht, die jeweils an den unterschiedlichen geographischen Orten mittels einer Kamera aufgenommen werden. Diese Bildsignale werden dann in einer Sendezentrale zusammengeschnitten, um auf diese Weise das bereitzustellende Video-Signal zu erhalten. Gemäß dem bekannten Prinzip erfolgt die Übertragung der Bildsequenzen zur Sendezentrale zumindest streckenweise per Richtfunk, Kabel oder Satellit. Die von der Sendezentrale empfangenen Bildsignale werden in diesem Fall sofort, also Live, als einzelne Teilabschnitte des erzeugten Video-Signals ausgestrahlt.

An dem genannten Prinzip ist von Nachteil, daß bei Verwendung einer Richtfunk-Übertragungsstrecke mit vertretbaren Kosten jeweils nur relativ kurze Entfernungen zwischen den Kameras und der Sendezentrale überbrückt werden können. Dieser Nachteil kann durch den Einsatz einer Kabel- oder Satellitenübertragung zwar überwunden werden, jedoch sind die damit verbundenen Kosten sehr hoch, so daß beispielsweise die Übertragung von Bildsignalen von unterschiedlichsten Orten der Erde zu einer einheitlichen Sendezentrale mit wirtschaftlich sinnvollem Aufwand nicht möglich ist.

Ein aus der WO 96/20568 A bekanntes System umfasst eine Datenwiedergewinnungsstufe zur Wiedergewinnung eines bereits vollständigen Video-Signals, das, einschließlich sämtlicher Bestandteile, bereits in einer jeweiligen Programmquelle vorhanden war. Mittels eines Multiplexers einer Codiereinrichtung wird aus einer Mehrzahl der bereits vollständigen Video-Signale ein zusammengesetztes Signal erzeugt, bevor dieses über eine Übertragungsstrecke zu einem Demultiplexer gesendet wird. Ein jeweiliges Video-Signal wird zurück gewonnen, nachdem das betreffende Video-Signal aus der Mehrzahl der unterschiedlichen, bereits vollständigen Video-Signale oder Kanäle, d.h. von dem demultiplexten zusammengesetzten Signal ausgewählt wurde. Zudem ist die den Multiplexer umfassende Codiereinrichtung dieses bekannten Systems auf der Sendeseite der Übertragungsstrecke vorgesehen. Auf dieser Sendeseite werden die jeweils in den jeweiligen Programmquellen vollständig existierenden Video-Signale noch nicht wieder gewonnen, sondern zu einem zusammengesetzten Signal zusammengestellt. Auf der Empfangsseite wird das zusammengesetzte Signal mittels eines Demultiplexers dann wieder aufgegliedert, um die jeweiligen einzelnen, ursprünglich bereits voll existierenden Video-Signale zurück zu gewinnen.

Ein vergleichbares System ist in der US-A-5 509 013 beschrieben. Auch hier wird mittels eines Multiplexers aus einer Mehrzahl bereits vollständig existierender Signale oder Kanäle ein zusammengesetztes Signal erzeugt, was wieder mittels einer so genannten "Kanalmultiplex-Vorrichtung" geschieht.

Eine Aufgabe der Erfindung besteht darin, eine Vorrichtung der eingangs genannten Art bereitzustellen, welche es mit vertretbarem wirtschaftlichen Aufwand ermöglicht, an unterschiedlichen, weit voneinander entfernten Orten aufgenommene Bildsignale zu empfangen und möglichst zeitnah, also mit möglichst geringer Verzögerung, als Bestandteile eines Video-Signals auszustrahlen.

Erfindungsgemäß wird diese Aufgabe gelöst durch eine Vorrichtung und ein System gemäß den Ansprüchen.

Erfindungsgemäß ist also die Übertragungsgeschwindigkeit, mit der zumindest ein, bevorzugt mehrere oder alle Bildsignale empfangen werden, geringer als die Übertragungsgeschwindigkeit, mit der das aus den Bildsignalen zusammengesetzte Video-Signal ausgesendet wird. Um trotz dieses Geschwindigkeitsunterschiedes die kontinuierliche Aussendung des Video-Signals mit hoher Qualität bzw. hoher Übertragungsgeschwindigkeit zu ermöglichen, werden jeweils mehrere der unterschiedlichen Bildsignale gleichzeitig von der erfindungsgemäßen Vorrichtung empfangen, wobei - wie erwähnt - die Übertragungsgeschwindigkeit zumindest eines dieser empfangenen Bildsignale geringer ist, als die Übertragungsgeschwindigkeit des aus den Bildsignalen zusammengesetzten Video-Signals. Der Empfang der Bildsignale erfolgt dabei bevorzugt zeitlich überlappend versetzt, was im Rahmen der Figurenbeschreibung noch erläutert wird.

Ein Vorteil der erfindungsgemäßen Vorrichtung ist folglich darin zu sehen, daß die Übertragung der unterschiedlichen Bildsignale von an verschiedenen geographischen Orten befindlichen Bildsignalquellen zu einer als Sendezentrale eingesetzten erfindungsgemäßen Vorrichtung mit geringerer Datenrate erfolgen kann. Aufgrund der reduzierten Übertragungsgeschwindigkeit können bereits existente, üblicherweise nicht für die Übertragung von Videosignalen geeignete Übertragungswege bzw. Datenleitungen mit vergleichsweise niedriger Kapazität zum Einsatz kommen, was eine Bildsignalübertragung über sehr weite Strecken zu vergleichsweise geringen Kosten ermöglicht. Der Aufbau neuer Netze und Übertragungswege ist also nicht zwingend erforderlich. Insbesondere kann erfindungsgemäß auf bestehende Wählleitungsnetze, wie Fernsprechnetze oder Internet zurückgegriffen werden, bei denen ein gezieltes Ein- und Auswählen erfolgen kann, was wiederum zur Folge hat, daß eine Leitung nur während derjenigen Zeitintervalle beansprucht und bezahlt werden muß, während derer sie tatsächlich benötigt wird.

Trotz der langsamen Übertragung kann erfindungsgemäß dem erzeugten Video-Signal ein Live-Charakter verliehen werden, indem man sicherstellt, daß ein von der Zentrale vollständig mit niedriger Geschwindigkeit empfangenes Bildsignal unmittelbar nach bzw. nur mit geringer zeitlicher Verzögerung nach vollständigem Empfang als Bestandteil des Video-Signals ausgesendet wird. Falls das Video-Signal ausschließlich aus Zeitabschnitten besteht, die nur eine Dauer von wenigen Minuten oder weniger besitzen, läßt sich mit einer erfindungsgemäßen Vorrichtung sicherstellen, daß die von der Zentrale empfangenen Bildsignale nur wenige Minuten nach deren Aufzeichnung durch die Bildsignalquellen als Bestandteil des Video-Signals ausgesendet werden. Bei Erzeugung eines Video-Signals, welches beispielsweise Wetter-Informationen von verschiedenen Orten übermitteln soll, ist eine solche Verzögerung um wenige Minuten ohne weiteres akzeptabel, da diese Verzögerung den Live-Charakter des Video-Signals in keiner Weise negativ beeinträchtigt.

An dieser Stelle sei bemerkt, daß die bei der Erläuterung der Erfindung verwendeten Begriffe Video-Signal und Bildsignal grundsätzlich auch solche Signale umfassen, die zusätzlich zur Bild- bzw. Videoinformation auch Ton- und/ oder Textinformation beinhalten.

Bevorzugt ist, wenn so viele Empfangseingänge bereitgestellt werden, daß zumindest im zeitlichen Mittel gilt, daß die Summe der Empfangs-Bitraten der gleichzeitig empfangenen Bildsignale größer oder gleich der Bereitstellungs-Bitrate x ist. So wird sichergestellt, daß immer ausreichend Bildsignale zur Erzeugung eines kontinuierlichen Video-Signals mit hoher Qualität zur Verfügung stehen.

Unterschiedlichen Empfangseingängen können voneinander verschiedene Empfangs-Bitraten zugeordnet werden, falls beispielsweise zu bestimmten Bildsignalquellen bzw. geographischen Orten leistungsstärkere Leitungen existieren als zu anderen Bildsignalquellen.

Es ist auch möglich, zumindest einen zusätzlichen Empfangseingang bereitzustellen, welcher beispielsweise dann zum Einsatz kommen kann, wenn Störungen im System, d. h. in den Bildsignalquellen, den Übertragungswegen und/oder der Zentrale auftreten. Im Falle solcher Störungen kann ein zusätzlicher Empfangseingang beispielsweise mit erhöhter Empfangs-Bitrate, insbesondere mit der Bereitstellungs-Bitrate x betrieben werden, um auf diese Weise ein Signal zu empfangen, welches direkt - ohne Zwischenspeicherung und ohne zeitliche Verzögerung - als Video-Signal gesendet werden kann, solange die Störung im System noch nicht behoben ist. Besonders bevorzugt ist es, wenn der zusätzliche Empfangseingang über eine Standleitung mit einer Bildsignalquelle gekoppelt wird, so daß bei Bedarf jederzeit kurzfristig auf das über den zusätzlichen Empfangseingang empfangene Bildsignal umgeschaltet werden kann.

In der Empfangsstufe können zum Empfang eines einzelnen Bildsignals mehrere Empfangseingänge zu einem Verbund zusammengeschaltet werden. Ein solcher Verbund kann zwei oder mehr, im Extremfall alle zur Verfügung stehenden Empfangseingänge umfassen. Über einen solchen Verbund sind dann die Daten eines einzelnen Bildsignals parallel übertragbar, was zu einer im Vergleich der Verwendung eines einzelnen Empfangseingangs für ein Bildsignal schnelleren Übertragung des Bildsignals führt.

Besonders bevorzugt ist es, wenn sich die Anzahlen der für die Übertragung einzelner Bildsignale jeweils zu einem Verbund zusammengeschalteten Empfangseingänge voneinander unterscheiden und an die jeweils gegebenen Übertragungskapazitäten und/oder Anforderungen anpaßbar sind. Auf diese Weise kann neben den unterschiedlichen, vom jeweiligen Nutzer festgelegten Anforderungen auch dem Umstand Rechnung getragen werden, daß für die Übertragung von Signalen zwischen den an unterschiedlichen Orten befindlichen Bildsignalquellen und der Zentrale in der Regel unterschiedliche Übertragungskapazitäten zur Verfügung stehen. Es können dann immer genau so viele Empfangseingänge zum Empfang eines einzelnen Bildsignals bereitgestellt werden, daß die jeweils zur Verfügung stehende Übertragungskapazität voll ausgenutzt wird. Für die Übertragung von Bildsignalen über Strecken mit hoher Übertragungskapazität können also mehrere Empfangseingänge gleichzeitig genutzt werden, wohingegen für die Übertragung eines Bildsignals über eine Strecke mit sehr niedriger Übertragungskapazität beispielsweise auch nur ein einzelner Empfangseingang bereitgestellt werden muß. Dabei ist zu berücksichtigen, daß die verschiedenen Empfangseingänge auch mit voneinander unterschiedlichen Übertragungskapazitäten bzw. Bitraten betrieben werden können.

Falls in einer Bildsignalquelle in bestimmten Anwendungsfällen mehrere Bildsignale abgespeichert werden, können diese bei entsprechend zur Verfügung stehender Übertragungskapazität auch parallel, d.h. gleichzeitig zur Zentrale übertragen werden.

Besonders vorteilhaft ist es, wenn die Anzahl der für die Übertragung eines einzelnen Bildsignals zu einem Verbund zusammengeschalteten Empfangseingänge zeitlich variabel und an die zu einem jeweiligen Zeitpunkt gegebenen Übertragungskapazitäten anpaßbar ist. So kann berücksichtigt werden, wenn beispielsweise infolge gestörter Übertragungsleitungen zu bestimmten Zeitpunkten eine geringere Übertragungskapazität zur Verfügung steht als bei voll funktionsfähigen Übertragungsleitungen. Die bei reduzierter Übertragungskapazität für die Übertragung des jeweiligen Bildsignals nicht genutzten Empfangseingänge können dann auf vorteilhafte Weise während des Defekts der jeweiligen Übertragungsleitung für die Übertragung anderer Bildsignale genutzt werden. So wird immer eine optimale Ausnutzung aller zur Verfügung stehenden Empfangseingänge gewährleistet.

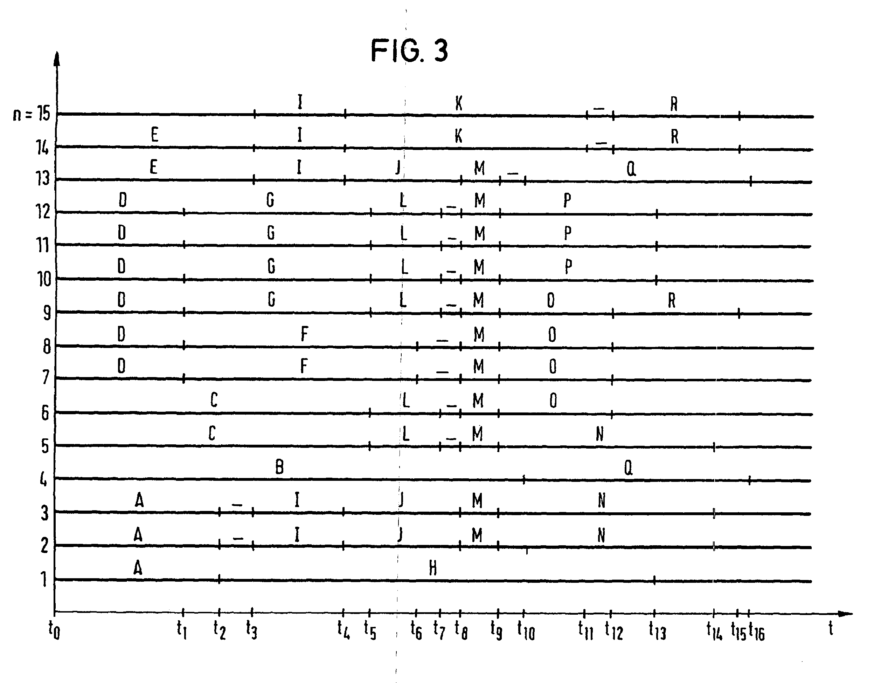

Das vorstehend erläuterte Prinzip zur Nutzung jeweils eines Verbundes von Empfangseingängen zum Empfang der einzelnen Bildsignale wird im Rahmen der Figurenbeschreibung unter Bezugnahme auf Fig. 3 näher erklärt.

Die erfindungsgemäß vorgesehene Sendestufe kann zur drahtgebundenen oder zur drahtlosen Aussendung eines digitalen Video-Signals oder eines aus einem digitalen Video-Signal gewonnenen analogen Video-Signals ausgebildet werden.

Vorteilhaft ist es, wenn die n Empfangseingänge an Wahl- und/oder Standleitungen anschließbar sind, da man auf diese Weise auf ein bereits bestehendes Übertragungsnetz zurückgreifen kann, welches überdies mit relativ geringen Kosten nutzbar ist. Einer oder mehrere der Empfangseingänge können an Standleitungen angeschlossen werden, wodurch man sicherstellen kann, daß zumindest bestimmte Bildsignale auch dann empfangbar sind, wenn Wahlleitungen zeitweise beispielsweise aufgrund Überlastung nicht zur Verfügung stehen. Die Übertragunskapazität der Standleitungen kann dabei gleich der oder größer als die Übertragungskapazität der Wahlleitungen sein.
Grundsätzlich können Leitungen zum Einsatz kommen, die nach einem üblichen Protokoll betrieben werden, wie z.B. nach einem ISDN-, VN3-, DSS1-, 1TR6-, TPH-, DASS2-, 4ESS-, 5ESS-, DMS/250-, DMS/100- und/oder NTT(INS1500)-Protokoll.

In einem praktischen Anwendungsfall der erfindungsgemäßen Vorrichtung sind beispielsweise 60 Empfangseingänge vorgesehen, die jeweils an eine ISDN-Datenleitungen (B-Kanal) anschließbar sind.

Vorzugsweise werden die Bildsignale über die Empfangseingänge in komprimierter Form empfangen und in der Speicherstufe abgelegt. Durch die Anwendung eines entsprechenden Komprimierverfahrens kann so zum einen die erforderliche Übertragungskapazität zwischen Bildsignalquelle und Zentrale weiter reduziert und zudem der durch die Speicherstufe zur Verfügung zu stellende Speicherplatz minimiert werden.
Ein aus komprimierten Bildsignalen gewonnenes Video-Signal kann somit ebenfalls komprimiert ausgesendet werden. Ebenso ist es jedoch auch möglich, bereits in der erfindungsgemäßen Vorrichtung eine Dekomprimierungsstufe für das erzeugte Video-Signal vorzusehen, wobei das Video-Signal dann dekomprimiert gesendet wird.

Besonders bevorzugt ist es, wenn in der erfindungsgemäßen Vorrichtung zusätzlich eine Schaltstufe zur wechselnden Verbindung der Empfangseingänge mit verschiedenen Bildsignalquellen vorgesehen ist. So wird erreicht, daß die Anzahl der insgesamt zum Einsatz kommenden Bildsignalquellen nicht auf die Anzahl der in der Vorrichtung vorgesehenen Empfangseingänge beschränkt ist, da mittels der Schaltstufe die vorgesehenen Empfangseingänge abwechselnd mit unterschiedlichen Bildsignalquellen verbunden werden können. Es ist somit ohne weiteres möglich, beispielsweise mit 30 Empfangseingängen, die je nach Bedarf zu den genannten Verbünden zusammenfaßbar sind, eine Anzahl von beispielsweise insgesamt 60 oder mehr Bildsignalquellen regelmäßig abzufragen und auf diese Weise ein Video-Signal zu erzeugen, welches aus aufeinanderfolgenden Zeitabschnitten besteht, die von 60 oder entsprechend mehr unterschiedlichen Bildsignalquellen stammen.

Bevorzugt ist es, wenn die erwähnte Schaltstufe als Wählstufe ausgebildet wird, wobei in der Schaltstufe insbesondere die Adressen bzw. Telefonnummern von verschiedenen, an unterschiedlichen geographischen Orten befindlichen Bildsignalquellen speicherbar sind.

Um eine zyklische und regelmäßige Ausstrahlung der von den unterschiedlichen Bildsignalquellen stammenden Bildsignale in Form jeweils eines Zeitabschnittes des Video-Signals zu erreichen, können die unterschiedlichen Bildsignalquellen von der Schaltstufe in einer wiederkehrenden Reihenfolge anwählbar sein. Ebenso ist jedoch auch ein Anwählen in einer sich ständig verändernden Reihenfolge möglich, wobei in diesem Fall auf besonders vorteilhafte Weise die sich evtl. zeitlich verändernden Anforderungen und oder die jeweils zur Verfügung stehenden Übertragungskapazitäten zu den verschiedenen Bildsignalquellen berücksichtigt werden können.

Die das Video-Signal bildenden aufeinanderfolgenden Zeitabschnitte der unterschiedlichen Bildsignale können jeweils untereinander gleiche oder voneinander verschiedene Zeitdauern aufweisen. Die Zeitdauer kann beispielsweise zwischen 15 Sekunden und 5 Minuten, insbesondere eine Minute betragen.

Vorteilhaft ist es, wenn in der Speicherstufe der erfindungsgemäßen Vorrichtung ein Pufferbereich vorgesehen ist, dessen Mindestgröße beispielsweise der kürzesten Zeitdauer entsprechen kann. Dieser Pufferbereich wird zusätzlich zu demjenigen Speicherbereich vorgesehen, welcher ohnehin zur Zwischenspeicherung der empfangenen Bildsignale nötig ist, so daß dieser zusätzliche Pufferbereich beispielsweise immer dann genutzt werden kann, wenn Störungen in der Übertragung von Bildsignalen von den Bildsignalquellen zur Zentrale auftreten. In einem solchen Störungsfall kann ein Bildsignal aus dem Pufferbereich ausgelesen und gesendet werden, wobei während dieser Sendezeit versucht werden kann, die aufgetretene Störung zu beheben.

Die Größe des Pufferbereichs kann in Abhängigkeit von Betriebsdaten der Vorrichtung variabel einstellbar sein. Wenn sich beispielsweise zeigt, daß die Vorrichtung über lange Zeit störungsfrei läuft, kann der Pufferbereich verkleinert, beim häufigen Auftreten von Störungen vergrößert werden.

Die in der erfindungsgemäßen Vorrichtung vorgesehene Speicherstufe kann beispielsweise nach dem FIFO-Prinzip betrieben werden, wobei auch der eventuell vorhandene, vorstehend beschriebene Pufferbereich in dieses FIFO-Prinzip mit einbezogen werden kann. Die Anwendung des genannten Prinzips zum Ein- und Auslesen der Speicherstufe bewirkt, daß zwischen der Aufnahme eines Bildsignals durch eine Bildsignalquelle und der Ausstrahlung des Bildsignals als Video-Signal nur eine möglichst kurze Zeit vergeht. Bei Einbeziehung des Pufferbereichs in das FIFO-Prinzip wird zudem sichergestellt, daß sich auch der Inhalt des Pufferbereichs ständig verändert und aktuell gehalten wird, so daß im Falle einer Störung keine veralteten Bildsignale gesendet werden müssen.

Vorteilhaft ist es ferner, wenn eine Auslösestufe zur Aussendung eines Startsignals an die Bildsignalquellen vorgesehen ist. Mittels dieser Auslösestufe kann veranlaßt werden, daß zu einem jeweils gewünschten Zeitpunkt eine Bildsignalquelle mit der Aufzeichnung eines Bildsignals beginnt. Bereits während der Aufzeichnung eines Bildsignals einer vorgegebenen Zeitdauer kann die Übertragung des aufgezeichneten Bildsignals an die erfindungsgemäße Vorrichtung veranlaßt werden. Auf diese Weise wird erreicht, daß zwischen der Aussendung des Startsignals an eine Bildsignalquelle und dem Beginn der Übertragung des Bildsignals dieser Bildsignalquelle zum jeweiligen Empfangseingang der erfindungsgemäßen Vorrichtung nur eine minimale Zeitdauer vergeht.

Ebenso ist es jedoch auch möglich, daß das Startsignal die Übertragung eines bereits aufgenommenen Bildsignals an die erfindungsgemäße Vorrichtung auslöst.

Schließlich ist es erfindungsgemäß bevorzugt, wenn eine Steuerstufe zur Aussendung von Steuersignalen an die Bildsignalquellen vorgesehen ist. Mittels einer solchen Steuerstufe können Einstellwerte für die Bewegung, den Bildausschnitt, die Blende und/oder den Fokus einer in einer Bildsignalquelle vorgesehenen Kamera übertragen werden, so daß letztlich die Funktion aller Bildsignalquellen vollständig von der Zentrale bzw. der erfindungsgemäßen Vorrichtung gesteuert werden kann.

Im Rahmen der Erfindung wird auch Schutz beansprucht für eine Bildsignalquelle zur Kopplung mit einer Zentrale bzw. einer Vorrichtung der vorstehend beschriebenen Art, wobei die Bildsignalquelle folgende Bestandteile aufweist:
- eine ein Bildsignal liefernde Kamera, wobei die Bildqualität zumindest der Bitrate x entspricht,
- einen Speicher zur Abspeicherung eines Bildsignals einer vorgegebenen Dauer,
- einen Empfangsanschluß zum Empfang von Steuersignalen, und
- einen Sendeanschluß zum Auslesen und Übertragen eines gespeicherten Bildsignals mit einer im Vergleich zur Bitrate x geringeren Bitrate.

Eine derartige Bildsignalquelle ist dazu geeignet, ein Bildsignal mit ausreichender Qualität, welche der Bitrate x entspricht, aufzuzeichnen, zu speichern und in Abhängigkeit vom Empfang von Steuersignalen mit einer langsamen Bitrate an eine Zentrale zu senden. Zudem kann die Bildsignalquelle Eingabemittel für gemeinsam mit dem Bildsignal zu übertragende Daten, insbesondere Textdaten aufweisen.

Bevorzugt ist es, wenn in der Bildsignalquelle ein Speicherbereich für über den Empfangsanschluß erhaltene Kamera-Betriebsparameter, wie z. B. Kamerabewegung, Bildausschnitt, Blende und/oder Fokus vorgesehen ist. Bei Vorsehung eines derartigen Speicherbereichs können die genannten Parameter je nach Anforderung variabel eingestellt und an die jeweils gegebenen Bedingungen angepaßt werden.

Für die Aufnahme und/oder die Übertragung eines aufgenommenen Bildsignals bestehen erfindungsgemäß beispielsweise folgende Möglichkeiten:

Die Aufnahme des Bildsignals kann von der Zentrale durch die Übertragung eines Steuer- bzw. Startsignals an die Bildsignalquelle ausgelöst werden. In der Folge kann entweder die aufgebaute Verbindung zwischen Bildsignalquelle und Zentrale während der Aufzeichnung des Bildsignals bestehen bleiben und die Übertragung des aufgezeichneten Bildsignals bereits während der Aufzeichnung erfolgen oder die aufgebaute Verbindung zwischen Bildsignalquelle und Zentrale kann während der Dauer der Aufzeichnung unterbrochen werden. In letztgenanntem Fall kann nach erfolgter Aufzeichnung entweder die Bildsignalquelle ein Steuersignal an die Zentrale oder die Zentrale ein Steuersignal an die Bildsignalquelle senden, welches die Übertragung des aufgezeichneten Bildsignals von der Bildsignalquelle zur Zentrale auslöst.

Alternativ ist es möglich, daß die Bildsignalquelle ein Bildsignal nach einem fest vorgegebenen und in der Bildsignalquelle gespeicherten Zeitschema aufzeichnet. Die Übertragung eines derart aufgezeichneten Bildsignals kann entweder dadurch ausgelöst werden, daß die Bildsignalquelle ein Steuersignal an die Zentrale sendet oder dadurch, daß die Zentrale ein derartiges Steuersignal an die Bildsignalquelle sendet. In letztgenanntem Fall ist es von Vorteil, wenn die Zentrale Informationen bezüglich des in der Bildsignalquelle gespeicherten Zeitschemas besitzt.

Ebenso ist es möglich, daß die Aufzeichnung eines Bildsignals durch einen mit der Kamera gekoppelten Sensor ausgelöst wird. Hierbei können beliebige Arten von Sensoren zum Einsatz kommen. Beispielsweise ist die Anwendung von Lichtsensoren, Bewegungsmeldern, Lichtschranken, Temperaturfühlern, Windmessern, sonstigen Wetterdaten-Meldern oder dergleichen sinnvoll. Durch die Anwendung solcher Sensoren kann erreicht werden, daß die Kamera nur dann ein Bildsignal aufzeichnet, wenn tatsächlich ein einen Zuschauer interessierendes Ereignis stattfindet; beispielsweise kann mittels eines Bewegungsmelders festgestellt werden, wann ein Vogel aus einem Ei schlüpft oder ein Tier an einer Futterstelle erscheint.

Die Aufnahme eines Bildsignals kann zeitlich unabhängig von der Übertragung des Bildsignals an die Zentrale erfolgen, wenn in der Bildsignalquelle entsprechende Speichermöglichkeiten vorgesehen werden. In diesem Fall kann das gespeicherte Bildsignal - unabhängig vom Zeitpunkt der Aufnahme - genau dann von der Zentrale abgerufen werden, wenn es dort benötigt wird.

Insbesondere ist es möglich, in der Bildsignalquelle mehrere Bildsignale, vorzugsweise nach einem vorgegebenen Ordnungsprinzip zu speichern. Durch diesen Vorrat an Bildsignalen können dann eventuelle Systemausfälle seitens der Bildsignalquelle oder seitens der Zentrale kompensiert werden.

Die erfindungsgemäße Bildsignalquelle kann ferner in einem Einstellmodus betreibbar sein, in dem sie durch Steuersignale von einer Zentrale kontrollierbar ist und gleichzeitig eine Übertragung der von der Kamera gelieferten Bildsignale an die Zentrale erzeugbar ist, die nur mit einigen Sekunden Verzögerung, also fast in Echtzeit erfolgt. Diese Übertragung wird dann bevorzugt mit verminderter Bildqualität, welche unterhalb der üblichen Sendequalität von Fernsehsignalen liegt, insbesondere mit der Bitrate y abgewickelt. In diesem Fall kann man an der Zentrale tatsächlich quasi Live das von der Kamera der Bildsignalquelle aufgezeichnete Bild sehen, wobei hier natürlich Qualitätseinbußen hinsichtlich des von der Zentrale empfangenen Bildes auftreten, die jedoch unschädlich sind, da die Übertragung des Bildsignals nur zu Einstellzwecken dient.

Schließlich ist es auch sinnvoll, Zentrale und Bildsignalquelle so auszugestalten, daß seitens der Zentrale eine Fernwartung der Bildsignalquelle durchgeführt werden kann. Im Rahmen der Fernwartung kann insbesondere ein Zeitabgleich, eine Systemprüfung und/oder eine Zustandsabfrage der Bildsignalquelle erfolgen.

Weitere bevorzugte Ausführungsformen der erfindungsgemäßen Vorrichtung sowie der erfindungsgemäßen Bildsignalquelle sind in den Unteransprüchen angegeben.

Die erfindungsgemäßen Vorrichtungen können nicht nur zur Erzeugung und Aussendung eines Videosignals genutzt werden. Ebenso ist es möglich, die Daten eines solchen Signals lediglich in einer erfindungsgemäßen Vorrichtung zu sammeln, aktuell zu halten und auf Abfrage bereitzustellen. Denkbar sind beispielsweise Anwendungsfälle, in denen ein Reisebüro, ein Hotel oder auch eine Fernsehanstalt über eine Wahl- oder Standleitung, insbesondere auch über Internet auf die erfindungsgemäße Vorrichtung zugreift und gezielt ein einzelnes Bildsignal gegen Entrichtung von Gebühren abruft. Dies kann z.B. sinnvoll sein, wenn ein Reisebüro einem Kunden zeigen möchte, welche Wetterlage an einem bestimmten Urlaubsort gerade herrscht. Es wird dann das Bildsignal genau dieses Ortes abgerufen, wobei das auf die in der erfindungsgemäßen Vorrichtung vorhandene Speicherstufe angewendete FIFO-Prinzip sicherstellt, daß dem Reisebüro ein möglichst aktuelles Bildsignal zur Verfügung gestellt wird. Ebenso kann beispielsweise eine Fernsehanstalt das Bildsignal einer bestimmten Hauptstadt abrufen und als Hintergrund für einen Sprecher verwenden, welcher über die entsprechende Stadt berichtet.

Die Erfindung wird nachfolgend anhand eines Ausführungsbeispiels unter Bezugnahme auf die Figuren beschrieben; in diesen zeigen:
- Fig. 1: ein Blockschaltbild einer erfindungsgemäßen Vorrichtung zur Erzeugung eines Video-Signals,
- Fig. 2: ein Blockschaltbild einer Bildsignalquelle zur Kopplung mit einer Vorrichtung gemäß Fig. 1, und
- Fig. 3: ein Zeitdiagramm, welches die zeitlich veränderliche Belegung der Empfangseingänge mit verschiedenen Bildsignalen veranschaulicht.

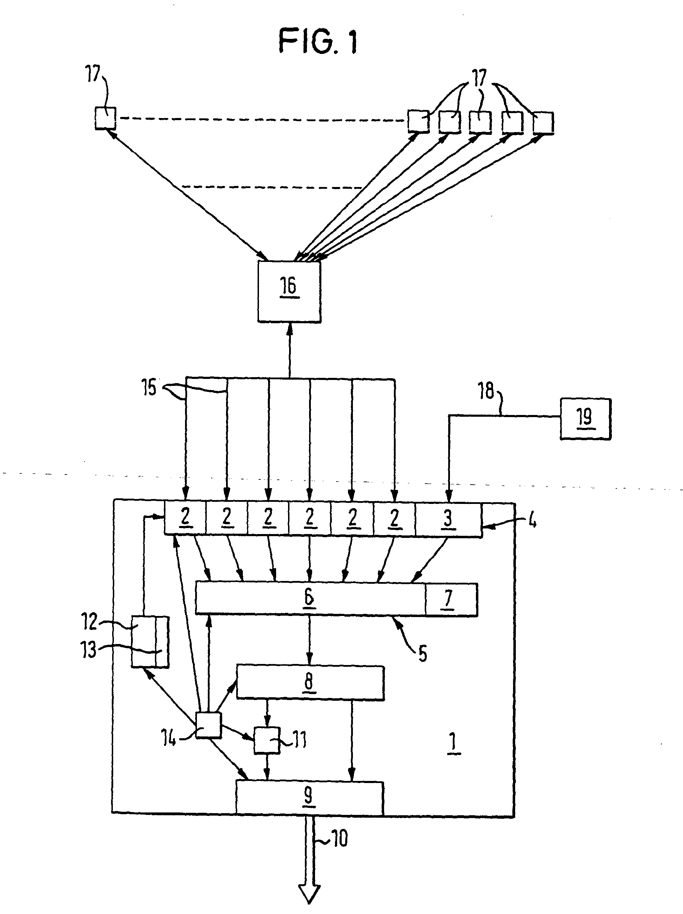

Die in Fig. 1 gezeigte Vorrichtung 1 besitzt sechs Empfangseingänge 2 sowie einen zusätzlichen Empfangseingang 3. Die Empfangseingänge 2, 3 bilden die Empfangsstufe 4, über welche die Vorrichtung 1 beispielsweise mit Wähl- und/oder Standleitungen, z.B. mit Telefonleitungen oder Internet-Leitungen koppelbar ist.

Alle Empfangseingänge 2, 3 sind mit einer Speicherstufe 5 verbunden, welche neben einem normalen Speicherbereich 6 zusätzlich auch noch einen Pufferbereich 7 aufweist.

Sowohl der normale Speicherbereich 6 als auch der Pufferbereich 7 sind dazu geeignet, Daten bzw. Signale zu speichern, die von der Empfangsstufe 4 empfangen werden.

Die in der Speicherstufe 5 speicherbaren Daten sind an eine Datenabrufstufe 8 übermittelbar, welche aus den in der Speicherstufe 5 gespeicherten Daten ein letztlich zu sendendes, digitales Video-Signal zusammenstellt, was nachfolgend noch erläutert wird.

Das von der Datenabrufstufe 8 erzeugte Video-Signal wird an eine Sendestufe 9 übertragen, welche zur drahtgebundenen oder drahtlosen Aussendung des Video-Signals über eine Sendeleitung 10 geeignet ist.

Für den Fall, daß die Datenabrufstufe ein komprimiertes Video-Signal erzeugt oder für den Fall, daß bereits die Empfangsstufe komprimierte Signale empfängt, welche dann auch zur Erzeugung eines komprimierten Video-Signals in der Datenabrufstufe 8 führen, kann das komprimierte Video-Signal - bei Bedarf - auch über eine Dekomprimierungsstufe 11 an die Sendestufe 9 übermittelt werden, so daß von der Sendestufe 9 letztlich ein dekomprimiertes Video-Signal gesendet werden kann.

Ferner ist in der Vorrichtung 1 eine Schaltstufe 12 vorgesehen, welche insbesondere als Wählstufe ausgebildet ist. In der Schaltstufe 12 ist ein Speicherbereich 13 für eine Vielzahl von Adressen bzw. Telefonnummern vorgesehen. Mittels der Schaltstufe 12 und den darin gespeicherten Adressen kann eine Verbindung der Empfangsstufe 4 zu von der Vorrichtung 1 entfernten Teilnehmern hergestellt werden, was ebenfalls nachstehend noch näher erläutert wird.

Die Empfangsstufe 4, die Speicherstufe 5, die Datenabrufstufe 8, die Sendestufe 9, die Dekomprimierungsstufe 11 sowie die Schaltstufe 12 werden von einem Mikroprozessor 14 kontrolliert, welcher alle Abläufe in der Vorrichtung 1 steuert.

Die Empfangseingänge 2 sind jeweils über Datenleitungen 15 mit einer oder mehreren externen Vermittlungsstufen 16 gekoppelt, welche Verbindungen zu einer Vielzahl, beispielsweise sechzig externen Bildsignalquellen 17 herstellen können, falls mittels der Schaltstufe 12 die Adresse einer solchen Bildsignalquelle 17 angewählt wird. Die Verbindung eines Empfangseingangs 2 und einer Bildsignalquelle 17 kann über einen Verbund von mehreren Datenleitungen 15 erfolgen, so daß Signale von der Bildsignalquelle 17 parallel über mehrere Leitungen 15 zum jeweiligen Empfangseingang 2 übertragen werden können.

Der zusätzliche Empfangseingang 3 ist über eine Standleitung 18 mit einer weiteren Bildsignalquelle 19 verbunden. Die von der Bildsignalquelle 19 gelieferten Bildsignale bzw. Daten können über die Standleitung 18 und den zusätzlichen Empfangseingang 3 in die Speicherstufe 6 oder direkt zur Sendestufe 9 transferiert werden.

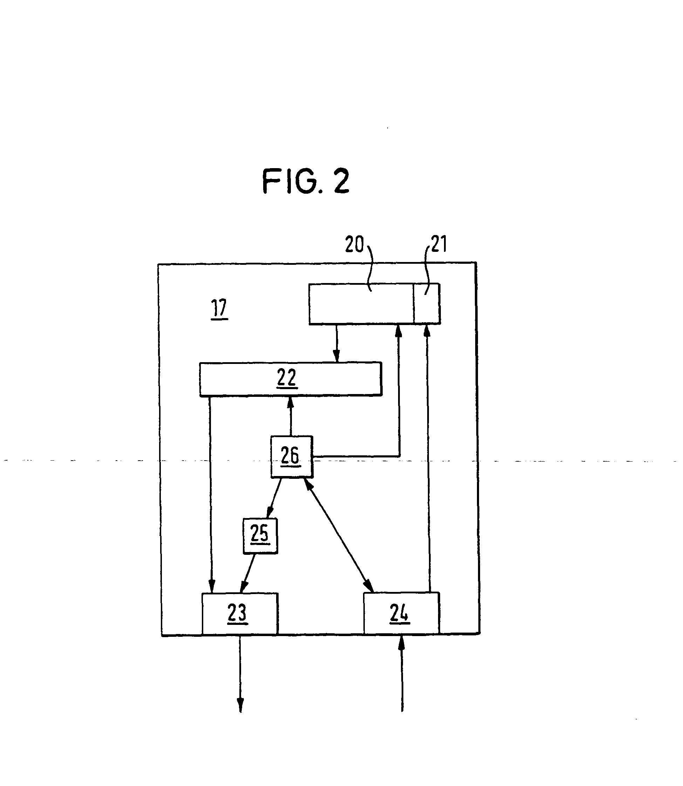

Fig. 2 zeigt eine Bildsignalquelle 17 gemäß Fig. 1.

Die Bildsignalquelle 17 umfaßt eine Kamera 20, wobei in der Kameraanordnung ein Speicherbereich 21 vorgesehen ist, in welchem Kamera-Betriebsparameter, wie z. B. Kamerabewegung, Bildausschnitt, Blende und/oder Fokus speicherbar sind.

Die von der Kamera 20 gelieferten Bildsignale sind in einem Speicher 22 ablegbar und von dort zu einem Sendeanschluß 23 übertragbar. Der Sendeanschluß 23 wird bei Bedarf mit einer Vermittlungsstelle 16 gemäß Fig. 1 verbunden.

In der Bildsignalquelle 17 ist weiterhin ein Empfangsanschluß 24 vorgesehen, welcher beispielsweise Steuer- oder Startsignale von einer Vorrichtung 1 gemäß Fig. 1 erhalten kann. Insbesondere kann der Empfangsanschluß 24 ein Startsignal zum Auslösen der Aufzeichnung einer Bildsequenz oder die bereits erwähnten Kamera-Betriebsparameter empfangen.

Mittels einer Wählstufe 25 kann der Sendeanschluß 23 bei Bedarf über die Vermittlungsstelle 16 mit einer Vorrichtung 1 verbunden werden, so daß nicht nur die Vorrichtung 1 bei einer Bildsignalquelle 17, sondern auch eine Bildsignalquelle 17 bei der Vorrichtung 1 anrufen kann.

Kamera 20, Speicher 22, Sendeanschluß 23, Empfangsanschluß 24 sowie Wählstufe 25 sind von einem Mikroprozessor 26 gesteuert.

Die Funktion und das Zusammenwirken der Vorrichtung 1 gemäß Fig. 1 und der Bildsignalquelle 17 gemäß Fig. 2 wird nachfolgend erläutert:

Zu einem Zeitpunkt t₁ wird über die Wählstufe 12 die Adresse einer ersten Bildsignalquelle 17 angewählt und über diese hergestellte Verbindung ein Startsignal an die betreffende Bildsignalquelle 17 gesendet. Die Bildsignalquelle 17 empfängt dieses Startsignal über den Empfangsanschluß 24 und veranlaßt in Abhängigkeit von diesem Empfang die Aufzeichnung einer Bildsequenz der Dauer tᵢ mittels der Kamera 20.

Die Verbindung zwischen der Vorrichtung 1 und der Bildsignalquelle 17 kann unmittelbar nach Empfang des Startsignals durch die Bildsignalquelle 17 wieder unterbrochen werden.

Die von der Kamera 20 aufgezeichnete Bildsequenz wird im Speicher 22 der Bildsignalquelle 17 abgelegt. Sobald die Bildsequenz im Speicher 22 vollständig gespeichert ist, wird mittels der Wählstufe 25 der Bildsignalquelle 17 über den Sendeanschluß 23 die Vorrichtung 1 angerufen und eine Verbindung zwischen der ersten Bildsignalquelle 17 und dem ersten Empfangseingang 2 der Vorrichtung 1 hergestellt. Nach Herstellen dieser Verbindung wird das im Speicher 22 gespeicherte Bildsignal an den ersten Empfangseingang 2 mit einer Datenrate y übertragen. Die Datenrate y ist dabei kleiner als diejenige Datenrate, mit der die aufgenommene Bildsequenz von der Kamera 20 zum Speicher 22 übertragen wird.

Alternativ kann die genannte Übertragung auch bereits während der Aufzeichnung initiiert werden, so daß es nicht nötig ist, daß mittels der Wählstufe 25 die Vorrichtung 1 angerufen wird.

Zu einem Zeitpunkt t₂, welcher bevorzugt um die Zeitspanne tᵢ nach dem Zeitpunkt t₁ liegt, wird mittels der Wählstufe 12 ein weiteres Startsignal zu einer zweiten Bildsignalquelle 17 gesendet, woraufhin nun mit dieser Bildsignalquelle 17 und dem zweiten Empfangseingang 2 der vorstehend bereits beschriebene Prozeß abläuft.

Ebenso wird zu den Zeitpunkten t₃, t₄, t₅ und t₆ mit dem dritten, vierten, fünften und sechsten Empfangseingang 2 sowie der dritten, vierten, fünften und sechsten Bildsignalquelle 17 verfahren.

Sobald die von der ersten Bildsignalquelle 17 aufgenommene Bildsequenz vollständig über die Datenleitung 15 zum ersten Empfangseingang 2 übertragen wurde, erfolgt über diesen ersten Empfangseingang die Übertragung einer von einer siebten Bildsignalquelle 17 aufgenommenen Bildsequenz. Um diese Übertragung zu ermöglichen, wurde von der Vorrichtung 1 rechtzeitig zuvor ein Startsignal an die siebente Bildsignalquelle 17 gesendet.

Entsprechend zeitlich versetzt erfolgt dann eine Übertragung von Bildsequenzen von der achten, neunten, zehnten, elften und zwölften Bildsignalquelle 17 zum zweiten, dritten, vierten, fünften und sechsten Empfangseingang 2.

Auf diese Weise können beispielsweise sechzig Bildsignalquellen 17 zyklisch abgefragt werden, wobei jeweils gleichzeitig, jedoch zeitlich überlappend versetzt eine Verbindung zu sechs von diesen sechzig Bildsignalquellen über die sechs Empfangseingänge 2 existiert. Es erfolgt also immer die gleichzeitige, zeitlich überlappend versetzte Übertragung von sechs Bildsequenzen von sechs unterschiedlichen Bildsignalquellen 17 zu den sechs Empfangseingängen 2, wobei die Übertragung von Bildsequenzen zweier aufeinanderfolgend angewählter Bildsignalquellen jeweils zeitlich versetzt um den Zeitraum tᵢ erfolgt.
Alternativ ist es jedoch auch möglich, die Bildsequenzen der unterschiedlichen Bildsignalquellen azyklisch und unregelmäßig zu übertragen und dabei die jeweils zur Verfügung stehenden, zeitlich veränderlichen Leitungskapazitäten zu berücksichtigen. Dies wird nachfolgend noch anhand Fig. 3 erklärt.

Die empfangenen Bildsequenzen werden von den Empfangseingängen 2 in der Speicherstufe 5 abgelegt, wo sie dann von der Datenabrufstufe 8 abgerufen werden. Die Datenabrufstufe 8 sorgt dafür, daß die einzelnen Bildsequenzen zeitlich nacheinander zusammengestellt und mit einer hohen Bitrate x an die Sendestufe 9 übertragen werden. Die Sendestufe 9 ist dann dazu in der Lage, das fertige Video-Signal mit der Bereitstellungs-Bitrate x oder auch als Analogsignal mit einer der Bitrate x entsprechenden Qualität auszustrahlen.

Um die Erzeugung eines kontinuierlichen Video-Signals zu ermöglichen, welches ausschließlich aus von den Bildsignalquellen 17 gelieferten Bildsequenzen besteht, muß gewährleistet sein, daß die Gesamtübertragungskapazität aller Leitungen 15, die zu den Empfangseingängen 2 führen, mindestens so hoch ist wie die Bereitstellungs-Bitrate x, mit der das Video-Signal von der Sendestufe 9 ausgestrahlt wird. Eine entsprechend geringere Kapazität bei den Leitungen 15 ist natürlich möglich, wenn das Video-Signal nicht ausschließlich aus Signalen der Bildsignalquellen 17 besteht, sondern wenn beispielsweise Sequenzen aus weiteren Quellen, z.B. aus einem geeigneten Speicher (Band, Festplatte, etc.) zwischengeschaltet werden. Diese Sequenzen werden dann bevorzugt mit der Bereitstellungs-Bitrate x zur Verfügung gestellt.

Für den Fall des Auftretens von Störungen ist die Speicherstufe 5 um einen Pufferbereich 7 erweitert, in welchem eine oder mehrere Reserve-Bildsequenzen abgelegt werden können, die abgerufen werden, falls ein Fehler in der Übertragung zwischen Bildsignalquellen 17 und Vorrichtung 1 auftritt. Die Größe des Pufferbereichs 7 kann dabei - wie bereits erläutert - variabel sein.

Der neben den Empfangseingängen 2 vorgesehene zusätzliche Empfangseingang 3 tritt beispielsweise dann in Funktion, wenn eine größere Störung auftritt, da für diesen Fall das von der Bildsignalquelle 19 über die Standleitung 18 gelieferte Bildsignal direkt von der Sendestufe 9 ausgestrahlt wird. Um hier eine ausreichende Qualität zu gewährleisten, muß die Übertragungskapazität der Standleitung 18 zumindest im wesentlichen der Bereitstellungs-Bitrate x entsprechen. Ebenso ist es jedoch auch möglich, den Empfangseingang 3 ständig, d. h. auch bei normaler Funktion der Vorrichtung, zu benutzen und das über diesen Empfangseingang 3 empfangene Bildsignal in den normalen Zyklus des Videosignals einzubinden.

Fig. 3 veranschaulicht anhand eines Zeitdiagramms, in welcher Weise beispielsweise 15 Empfangseingänge 2 und/oder 3 einer erfindungsgemäßen Vorrichtung 1 für die gleichzeitige, zeitlich überlappend versetzte Übertragung verschiedener Bildsignal A bis R genutzt werden können, wobei ein sich vom Zeitpunkt to bis zum Zeitpunkt t₁₆ erstreckender Zeitraum dargestellt ist. Die Empfangseingänge 2 und/oder 3 können mit voneinander verschiedenen Bitraten bzw. Übertragungsgeschwindigkeiten betrieben werden.

Beginnend mit dem Zeitpunkt to wird das Bildsignal A über die Empfangseingänge 1, 2 und 3, das Bildsignal B über den Empfangseingang 4, das Bildsignal C über die Empfangseingänge 5 und 6, das Bildsignal D über die Empfangseingänge 7 bis 12 und das Bildsignal E über die Empfangseingänge 13 und 14 empfangen. Dies bedeutet, daß beispielsweise das Bildsignal D parallel über sechs verschiedene Empfangseingänge in relativ kurzer Zeit empfangbar ist, wohingegen der serielle Empfang des Bildsignals B über lediglich einen einzigen Empfangseingang längere Zeit beansprucht.

Die Entscheidung, wie viele Empfangseingänge für den Empfang eines einzelnen Bildsignals genutzt werden, kann in Abhängigkeit von den jeweils vorhandenen Übertragungsleitungen zwischen der Zentrale und der jeweiligen Bildsignalquelle sowie in Abhängigkeit von den jeweils entstehenden Kosten getroffen werden. Es muß lediglich sichergestellt werden, daß so viele Daten eines Bildsignals empfangen werden, daß das Bildsignal über eine vorgegebene Zeitdauer tᵢ als Video-Signal mit ausreichender Qualität gesendet werden kann. Die Sende-Zeitdauern tᵢ, die ein Bildsignal jeweils im ausgesendeten Video-Signal beansprucht, können untereinander gleich oder voneinander verschieden sein.

Nachdem zum Zeitpunkt t₁ der Empfang des Bildsignals D abgeschlossen ist, stehen die Empfangseingänge 7- 12 für den Empfang weiterer Bildsignale zur Verfügung. Dementsprechend beginnt nun der Empfang des Bildsignals F über die Empfangseingänge 7 und 8 und der Empfang des Bildsignals G über die Empfangseingänge 9 bis 12.

Nachdem zum Zeitpunkt t₂ das Bildsignal A vollständig empfangen wurde, beginnt der serielle Empfang des Bildsignals H zum Zeitpunkt t₂ über den Empfangseingang 1.

Für den Empfang des Bildsignals I kann es zum Beispiel am wirtschaftlichsten sein, wenn die Übertragung parallel über 5 Empfangsseingänge erfolgt. In diesem Fall steuert der Mikroprozessor die erfindungsgemäße Vorrichtung derart, daß gewartet wird, bis 5 parallele Empfangseingänge zur Verfügung stehen. Dies ist gemäß Fig. 3 zum Zeitpunkt t₃ der Fall, zu dem dann die Übertragung des Bildsignals I über die Empfangseingänge 2, 3, 13, 14 und 15 beginnt. Um diese 5 Empfangseingänge zur Verfügung zu haben, wird nach dem vollständigen Empfang des Bildsignals A der Betrieb der Empfangseingänge 2 und 3 für die Zeitspanne zwischen t₂ und t₃ unterbrochen.

Zum Zeitpunkt t₄ ist die Übertragung des Bildsignals I abgeschlossen, woraufhin die Übertragung des Bildsignals J über die Empfangseingänge 2, 3 und 13 begonnen werden kann. Gleichzeitig wird zum Zeitpunkt t₄ die Übertragung des Bildsignals K über die Empfangseingänge 14 und 15 begonnen.

Die Übertragung der Bildsignale L bis R erfolgt in entsprechender Weise gemäß der Darstellung in Fig. 3.

Es sei an dieser Stelle bemerkt, daß ein und dasselbe Bildsignal zu verschiedenen Zeiten über unterschiedlich viele Empfangseingänge empfangen werden kann, je nach Anzahl der gerade zur Verfügung stehenden Leitungen oder auch nach den jeweils gerade geltenden Übertragungskosten (Tag- und Nachttarif). Es ist beispielsweise möglich, zum Zeitpunkt T16 die Übertragung einer neuen Sequenz des Bildsignals D über lediglich vier Empfangseingänge zu starten, wobei die Übertragungsdauer dann natürlich länger sein wird als die Zeitspanne zwischen T₀ und T₁.

Mittels eines geeigneten Computerprogramms kann während des Betriebs der Vorrichtung jeweils die genaue Reihenfolge der zu übertragenden Bildsignale von unterschiedlichen Bildsignalquellen dynamisch festgelegt werden, wobei hier jeweils die geltenden Übertragungstarife sowie die jeweils zur Verfügung stehenden Übertragungsleitungen berücksichtigt werden. Dabei kann mittels eines entsprechenden Programms sichergestellt werden, daß die Bildsignale von allen Bildsignalquellen in einer möglichst regelmäßigen, zyklischen Reihenfolge empfangen und als Videosignal bereitgestellt werden.

Die genannte zyklische Reihenfolge kann jedoch auch gezielt unterbrochen werden, wenn beispielsweise von einem bestimmten geographischen Ort ein aktuelles Ereignis zu übertragen ist. Die Übertragung dieses aktuellen Ereignisses kann dann eine neue Berechnung des gesamten Ablaufs bzw. der vorgegebenen Reihenfolge bewirken.

## Patentansprüche

1. Vorrichtung (1) zur Bereitstellung eines Video-Signals mit einer, einer Bereitstellungs-Bitrate x entsprechenden Qualität, mit
- einer Empfangsstufe (4), welche eine Mehrzahl n von Empfangseingängen (2) zum gleichzeitigen Empfang von an unterschiedlichen, weit voneinander entfernten geographischen Orten jeweils mit einer zumindest der Bereitstellungs-Bitrate (X²) entsprechenden Bitrate aufgenommenen und von diesen über eine jeweilige Übertragungsstrecke übertragenen unterschiedlichen Bildsignalen Yᵢ aufweist, von denen zumindest eines eine im Vergleich zur Bereitstellungs-Bitrate x geringeren Empfangs-Bitrate yᵢ aufweist,
- einer Speicherstufe (5) zur Zwischenspeicherung der empfangenen Bildsignale Yi, und
- einer Datenabrufstufe (8) zum mit der Bereitstellungs-Bitrate x erfolgenden Auslesen der zwischengespeicherten Bildsignale Yi und zur Bereitstellung des Video-Signals (X) für dessen Aussendung als kontinuierliches Video-Signal mit Live-Charakter und damit für eine zyklische und regelmäßige Aussendung der von unterschiedlichen Bildsignalquellen (17) an den unterschiedlichen, weit von einander entfernten geographischen Orten stammenden Bild signalen (Yᵢ) in Form eines jeweiligen Zeit abschitts der Kontinuierlichen Video-Signals, welches aus unmittelbar aufeinander folgenden Zeitabschnitten der unterschiedlichen Bildsignale Yᵢ zusammengesetzt ist.

2. Vorrichtung nach Anspruch 1,
**dadurch gekennzeichnet,**
**daß** zumindest im zeitlichen Mittel gilt, daß die Summe der Empfangs-Bitraten yᵢ der gleichzeitig empfangenen Bildsignale Yᵢ größer oder gleich der Bereitstellungs-Bitrate x ist, wobei insbesondere unterschiedlichen Empfangseingängen (2) voneinander verschiedene Empfangs-Bitraten yᵢ zugeordnet sind.

3. Vorrichtung nach einem der vorhergehenden Ansprüche,
**dadurch gekennzeichnet,**
**daß** in der Empfangsstufe eine Anzahl mᵢ von Empfangseingängen (2) zum Empfang eines einzelnen Bildsignals Yᵢ zu einem Verbund zusammenschaltbar sind, wobei gilt: 1 ≤ mᵢ ≤ n, wobei insbesondere die Daten zumindest eines Bildsignals Yi über einen Verbund von zumindest zwei zusammengeschalteten Empfangseingängen (2) parallel empfangbar sind.

4. Vorrichtung nach Ansprch 3,
**dadurch gekennzeichnet,**
**daß** sich die Anzahlen mᵢ der für die Übertragung der einzelnen Bildsignale Yᵢ jeweils zu einem Verbund zusammengeschalteten Empfangseingänge (2) voneinander unterscheiden und an die jeweils gegebenen Übertragungskapazitäten anpaßbar sind, und/oder daß die Anzahl mᵢ der für die Übertragung eines einzelnen Bildsignals Yᵢ zu einem Verbund zusammengeschalteten Empfangseingänge (2) zeitlich variabel und an die zu einem jeweiligen Zeitpunkt gegebenen Anforderungen und/oder Übertragungskapazitäten anpaßbar ist, und/oder daß eine Sendestufe (9) zur drahtgebundenen oder drahtlosen Aussendung eines digitalen Video-Signals oder eines aus einem digitalen Video-Signal gewonnenen analogen Video-Signals vorgesehen ist.

5. Vorrichtung nach einem der vorhergehenden Ansprüche,
**dadurch gekennzeichnet,**
**daß** die n Empfangseingänge (2) an Wahl- und/oder Standleitungen, insbesondere an ISDN- oder gemäß einem anderen üblichen Protokoll betriebene Leitungen (15) anschließbar sind, wobei insbesondere ungefähr n = 60 Empfangseingänge (2) vorgesehen sind, die jeweils an eine ISDN-Datenleitung (15) (B-Kanal) anschließbar sind.

6. Vorrichtung nach einem der vorhergehenden Ansprüche,
**dadurch gekennzeichnet,**
**daß** die Bildsignale Yᵢ in komprimierter Form empfangen werden und in der Speicherstufe (5) ablegbar sind, wobei insbesondere eine Dekomprimierungsstufe (11) für das bereitzustellende Video-Signal vorgesehen ist.

7. Vorrichtung nach einem der vorhergehenden Ansprüche,
**dadurch gekennzeichnet,**
**daß** eine insbesondere als Wählstufe ausgebildete Schaltstufe (12) zur wechselnden Verbindung der Empfangseingänge (2) mit verschiedenen Bildsignalquellen (17) vorgesehen ist, wobei insbesondere in der Schaltstufe (12) die Adressen von k verschiedenen, an unterschiedlichen geographischen Orten befindlichen Bildsignalquellen (17) speicherbar sind, und wobei vorzugsweise k größer als die Anzahl der gleichzeitig empfangbaren Bildsignale Yi ist.

8. Vorrichtung nach Anspruch 7,
**dadurch gekennzeichnet,**
**daß** die k unterschiedlichen Bildsignalquellen (17) von der Schaltstufe (12) in einer variablen und an die jeweils zur Verfügung stehenden Leitungskapazitäten und/oder Anforderungen anpaßbaren Reihenfolge anwählbar sind, und/öder daß die k unterschiedlichen Bildsignalquellen (17) von der Schaltstufe (12) in einer wiederkehrenden Reihenfolge anwählbar sind.

9. Vorrichtung nach einem der vorhergehenden Ansprüche,
**dadurch gekennzeichnet,**
**daß** die das Video-Signal bildenden, aufeinanderfolgenden Zeitabschnitte der unterschiedlichen Bildsignale Yi jeweils voneinander verschiedene oder untereinander gleiche Zeitdauern tᵢ aufweisen, wobei insbesondere die Zeitdauern tᵢ zwischen 15 s und 5 min, insbesondere ungefähr 1 min betragen.

10. Vorrichtung nach Anspruch 9,
**dadurch gekennzeichnet,**
**daß** in der Speicherstufe (5) ein Pufferbereich (7) vorgesehen ist, dessen Größe bevorzugt zumindest so groß ist, wie die kürzeste Zeitdauer tᵢ, wobei insbesondere die Größe des Pufferbereichs (7) in Abhängigkeit von Betriebsdaten der Vorrichtung (1) variabel einstellbar ist.

11. Vorrichtung nach einem der vorhergehenden Ansprüche,
**dadurch gekennzeichnet,**
**daß** die Speicherstufe (5, 6, 7) nach dem FIFO-Prinzip betreibbar ist, und/oder daß zumindest ein Zusatz-Empfangseingang (3) vorgesehen ist, welcher im Normalbetrieb und/oder in Ausnahmefällen über eine Standleitung (18) mit einer Bildsignalquelle (17) koppelbar ist, wobei insbesondere die Übertragungskapazität der Standleitung (18) der Bereitstellungs-Bitrate x entspricht.

12. Vorrichtung nach einem der vorhergehenden Ansprüche,
**dadurch gekennzeichnet,**
**daß** eine Auslösestufe (12) zur Aussendung eines Startsignals an die Bildsignalquellen (17) und zur Veranlassung des Aufnehmens eines Bildsignals Yᵢ und/oder zur Veranlassung der Übertragung eines aufgenommenen Bildsignals Yᵢ zu einem Empfangseingang (2) vorgesehen ist, wobei insbesondere der Beginn der Übertragung des Bildsignals Yᵢ einer Bildsignalquelle (17) zum jeweiligen Empfangseingang (2) während des durch die Bildsignalquelle (17) erfolgenden Aufnehmens des Bildsignals Yᵢ oder danach auslösbar ist.

13. Vorrichtung nach einem der vorhergehenden Ansprüche,
**dadurch gekennzeichnet,**
**daß** eine Steuerstufe (14) zur Aussendung von Steuersignalen an die Bildsignalquellen (17) vorgesehen ist, wobei insbesondere die Steuersignale Einstellwerte für die Bewegung, den Bildausschnitt, die Blende und/oder den Fokus einer in der Bildsignalquelle (17) vorgesehenen Kamera (20) umfassen.

14. System mit einer Vorrichtung (1) nach einem der Ansprüche 1 bis 13 und einer Bildsignalquelle (17) zur Kopplung mit der Vorrichtung (1), mit
- einer ein Bildsignal Yᵢ mit zumindest einer der Bitrate x entsprechenden Qualität liefernden Kamera (20),
- einem Speicher (22) zur Abspeicherung eines Bildsignals Yᵢ der Dauer tᵢ,
- einem Empfangsanschluß (24) zum Empfang von Steuersignalen, und
- einem Sendeanschluß (23) zum Auslesen und Übertragen eines gespeicherten Bildsignals Yᵢ mit einer im Vergleich zur Bitrate x geringeren Bitrate yᵢ.

15. System nach Anspruch 14,
**dadurch gekennzeichnet,**
**daß** ein Speicherbereich (21) für über den Empfangsanschluß (24) erhaltene Kamera-Betriebsparameter, wie z.B. Kamerabewegung, Bildausschnitt, Blende und/oder Fokus vorgesehen ist, und/oder daß die Aufnahme eines Bildsignals Yᵢ durch den Empfang eines Steuersignals und/oder in einem vorgegebenen Zeitraster auslösbar ist, und/oder daß die Aufnahme eines Bildsignals Yi durch einen mit der Kamera gekoppelten Sensor, insbesondere einen Lichtsensor, einen Bewegungsmelder, eine Lichtschranke, einen Temperaturfühler, einen Windmesser oder dgl. auslösbar ist.

16. System nach einem der Ansprüche 14 oder 15,
**dadurch gekennzeichnet,**
**daß** ein Wählstufe (25) zur Herstellung einer Verbindung zu der Vorrichtung (1) vorgesehen ist, wobei insbesondere die Verbindung bereits vor vollständiger Speicherung eines Bildsignals Yᵢ der Dauer tᵢ herstellbar ist.

17. System nach einem der Ansprüche 14 bis 16,
**dadurch** gekenzeichnet,
daß die Bildsignalquelle in einem Einstellmodus betreibbar ist, in dem sie durch Steuersignale von der Vorrichtung (1) kontrollierbar ist und gleichzeitig eine Übertragung der von der Kamera (20) gelieferten Bildsignale Yᵢ an die Vorrichtung (1) erzeugbar ist, wobei insbesondere die Übertragung mit einer unterhalb der Qualität üblicher Fernsehsignale liegenden Bildqualität, insbesondere mit einer Bitrate erfolgt, die kleiner als die Bereitstellungs-Bitrate x ist.

## Claims

1. Apparatus (1) for the provision of a video signal of a quality corresponding to a provision bit rate (x) comprising
- a receiver stage (4) having a plurality n of receiving inputs (2) for the simultaneous reception of different image signals Yi which have been taken at different geographical locations disposed far apart from one another in each case with a bit rate corresponding at least to the provision bit rate (x) and at least one of which has a receiving bit rate yᵢ lower in comparison with the provision bit rate (x);
- a storage stage (5) for the intermediate storage of the received image signals Yᵢ; and
- a data retrieval stage (8) for the reading out of the intermediately stored image signals Yi which takes place with the provision bit rate x and for the provision of the video signal (X) for its transmission as a continuous video signal which has a live character and thus for a cyclic and regular transmission of the image signals (Yᵢ) originating from different image signal sources (17) at the different geographical locations disposed far apart from one another in the form of a respective time section of the continuous video signal and which is composed of directly sequential time segments of the different image signals Yi.

2. Apparatus in accordance with claim 1, **characterized in that** the sum of the reception bit rates yᵢ of the simultaneously received image signals Yi is greater than or the same as the provision bit rate x, at least in time average, with receiving bit rates yᵢ which differ from one another in particular being associated with different receiving inputs (2).

3. Apparatus in accordance with any one of the preceding claims, **characterized in that** a number mᵢ of receiving inputs (2) can be switched together to a group for the reception of an individual image signal Yᵢ, where 1 ≤ mᵢ ≤ n, with the data of at least one image signal Yᵢ being able to be received in parallel via a group of at least two switched together receiving inputs (2).

4. Apparatus in accordance with claim 3, **characterized in that** the numbers mᵢ of the receiving inputs (2) which are in each case switched together to a group for the transmission of the individual image signals Yᵢ differ from one another and are adaptable to the respectively existing transmission capacities; and/or **in that** the number mᵢ of the receiving inputs (2) which are switched together to a group for the transmission of an individual image signal Yi is variable time-wise and is adaptable to the requirements and/or transmission capacities existing at a respective time point; and/or in that a transmission stage (9) is provided for the transmission by wire or wireless of a digital video signal or of an analogue video signal obtained from a digital video signal.

5. Apparatus in accordance with any one of the preceding claims, **characterized in that** the n receiving inputs (2) are connectable to selection lines and/or direct lines, in particular to ISDN lines (15) or lines operated in accordance with another customary protocol, with approximately n = 60 receiving inputs (2) in particular being provided which are respectively connectable to an ISDN data line (15) (B-channel).

6. Apparatus in accordance with any one of the preceding claims, **characterized in that** the image signals Yᵢ are received in compressed form and can be stored in the storage stage (5), with a decompression stage (11) in particular being provided for the video signal to be provided.

7. Apparatus in accordance with any one of the preceding claims, **characterized in that** a switching stage (12), which is in particular made as a selecting stage, is provided for the alternating connection of the receiving inputs (2) to different image signal sources (17), with the addresses of k different image signal sources (17) located at different geographical locations in particular being able to be stored in the switching stage (12) and with k preferably being larger than the number of the simultaneously receivable image signals Yi.

8. Apparatus in accordance with claim 7, **characterized in that** the k different image signal sources (17) can be selected by the switching stage (12) in a variable sequence adaptable to the respectively available line capacities and/or demands; and/or **in that** the k different image signal sources (17) can be selected by the switching stage (12) in a repeating sequence.

9. Apparatus in accordance with any one of the preceding claims, **characterized in that** the sequential time sections of the different image signals Yᵢ forming the video signal are of time durations tᵢ respectively different from one another or the same as one another, with the time durations t1 in particular amounting to between 15 s and 5 min, in particular to approximately 1 min.

10. Apparatus in accordance with claim 9, **characterized in that** a buffer region (7) is provided in the storage stage (5) and whose size is preferably at least as large as the shortest time duration tᵢ, with the size of the buffer region (7) in particular being variably adjustable in dependence on the operating data of the apparatus (1).

11. Apparatus in accordance with any one of the preceding claims, **characterized in that** the storage stage (5, 6, 7) can be operated in accordance with the FIFO principle; and/or **in that** at least one additional receiving input (3) is provided which can be coupled to an image signal source (17) in normal operation and/ or in exceptional cases via a direct line (18), with the transmission capacity of the direct line (18) in particular corresponding to the provision bit rate x.

12. Apparatus in accordance with any one of the preceding claims, **characterized in that** a trigger stage (12) is provided for the transmission of a start signal to the image signal sources (17) and to cause the recording of an image signal Yi and/or to cause the transmission of a received image signal Yi to a receiving input (2), with the start of the transmission of the image signal Yᵢ of an image signal source (17) to the respective receiving input (2) in particular being able to be triggered during the recording of the image signal Yᵢ which takes place through the image signal source (17) or thereafter.

13. Apparatus in accordance with any one of the preceding claims, **characterized in that** a control stage (14) is provided for the transmission of control signals to the image signal sources (17), with the control signals in particular including setting values for the movement, the image section, the aperture and/or the focus of a camera (20) provided in the image signal source (17).

14. System comprising an apparatus (1) in accordance with any one of the claims 1 to 13 and an image signal source (17) for the coupling with the apparatus (1), comprising
- a camera (20) which delivers an image signal Yi with a quality corresponding at least to the bit rate x;
- a memory (22) for the storage of an image signal Yi of the duration tᵢ;
- a receiving connection (24) for the reception of control signals; and
- a transmitting connection (23) for the reading out and transmission of a stored image signal Yi with a bit rate Yᵢ smaller in comparison with the bit rate x.

15. System in accordance with claim 14, **characterized in that** a memory region (21) is provided for camera operating parameters received via the receiving connection (24), such as for example camera movement, image section, aperture and/or focus; and/or **in that** the recording of an image signal Yi can be triggered through the reception of a control signal and/or in a predetermined time grid; and/or **in that** the recording of an image signal Yᵢ can be triggered by a sensor coupled to the camera, in particular a light sensor, a movement sensor, a light barrier, a temperature sensor, a wind measuring device or the like.

16. System in accordance with any one of the claims 14 or 15, **characterized in that** a selecting stage (25) is provided for the establishing of a connection to the apparatus (1), with the connection in particular already being able to be established prior to complete storage of an image signal Yi of the duration t1.

17. System in accordance with any one of the claims 14 to 16, **characterized in that** the image signal source can be operated in an adjustment mode in which it is controllable by control signals from the apparatus (1) and simultaneously a transmission can be produced of the image signals Yᵢ delivered by the camera (20) to the apparatus (1), with the transmission in particular taking place with an image quality which lies beneath the quality of normal television signals, in particular with a bit rate which is smaller than the provision bit rate x.

## Revendications

1. Dispositif (1) pour fournir un signal vidéo d'une qualité correspondante à un débit binaire de fourniture x, comportant
- un étage récepteur (4) qui comprend une pluralité n d'entrées de réception (2) pour la réception simultanée de différents signaux image Y; qui sont enregistrés à différents endroits géographiques très éloignés les uns des autres à un débit binaire respectif correspondant au moins au débit binaire de fourniture (x), et qui sont transmis à partir desdits endroits sur un trajet de transmission respectif, signaux dont au moins un présente un débit binaire de réception y; inférieur au débit binaire de fourniture x,
- un étage mémoire (5) pour la mémorisation intermédiaire des signaux image Yᵢ reçus, et
- un étage d'appel de données (8) pour la lecture des signaux image Yᵢ mémorisés temporairement qui s'effectue au débit binaire de fourniture x et pour la fourniture du signal vidéo (X) pour son émission à titre de signal vidéo continu à caractère "en direct" (live) et donc pour une émission cyclique et régulière des signaux image (Y;) provenant des différentes sources de signal image (17) aux différents endroits géographiques très éloignés les uns des autres sous la forme d'un intervalle de temps respectif du signal vidéo continu, qui est composé de périodes temporelles immédiatement successives des différents signaux image Y;.

2. Dispositif selon la revendication 1,
**caractérisé en ce que**
au moins en moyenne temporelle s'applique que la somme des débits binaires de réception yᵢ des signaux image Yᵢ reçus simultanément est supérieure ou égale au débit binaire de fourniture x, et des débits binaires de réception y; différents entre eux sont associés en particulier à différentes entrées de réception (2).

3. Dispositif selon l'une des revendications précédentes,
**caractérisé en ce que**
dans l'étage récepteur, un certain nombre mᵢ d'entrées de réception (2) sont susceptibles d'être regroupées en un ensemble pour recevoir un signal image individuel Yᵢ, où s'applique 1 ≤ mᵢ ≤n, en particulier les données d'au moins un signal image Yᵢ pouvant être reçues en parallèle par un ensemble d'au moins deux entrées de réception regroupées (2).

4. Dispositif selon la revendication 3,
**caractérisé en ce que**
les nombres mᵢ des entrées de réception (2) regroupées en un ensemble respectif pour la transmission des signaux image Yᵢ individuels se distinguent les uns des autres et sont susceptibles d'être adaptés aux capacités de transmission données respectives, et/ou **en ce que** le nombre mᵢ des entrées de réception (2) regroupées en un ensemble respectif pour la transmission des signaux image Yᵢ individuels est variable dans le temps et susceptible d'être adapté aux exigences et/ou aux capacités de transmission données à un instant respectif, et/ou **en ce qu'**un étage émetteur (9) est prévu pour l'émission sur fil ou sans fil d'un signal vidéo numérique ou d'un signal vidéo analogique récupéré à partir d'un signal vidéo numérique.

5. Dispositif selon l'une des revendications précédentes,
**caractérisé en ce que**
les n entrées de réception (2) sont susceptibles d'être connectées à des lignes commutées et/ou spécialisées, en particulier à des lignes (15) RNIS (ISDN) ou fonctionnant selon un autre protocole habituel, en particulier environ n = 60 entrées de réception (2) étant prévues qui sont susceptibles d'être connectées chacune à une ligne de données RNIS (15) (canal B).

6. Dispositif selon l'une des revendications précédentes,
**caractérisé en ce que**
les signaux image Y; sont reçus sous forme comprimée et sont susceptibles d'être déposés dans l'étage de mémorisation (5), et il est prévu en particulier un étage de décompression (11) pour le signal vidéo à fournir.

7. Dispositif selon l'une des revendications précédentes,
**caractérisé en ce que**
il est prévu un étage de commutation (12) réalisé en particulier sous forme d'étage de sélection pour la liaison alternante des entrées de réception (2) avec différentes sources de signaux image (17), et en particulier les adresses de k sources de signaux image (17) différentes situées à différents endroits géographiques peuvent être mémorisées dans l'étage de commutation (12) et k est de préférence supérieur au nombre des signaux image Yᵢ susceptibles d'être reçus simultanément.

8. Dispositif selon la revendication 7,
**caractérisé en ce que**
les k sources de signaux image différentes (17) sont susceptibles d'être sélectionnées par l'étage de commutation (12) en une succession variable et adaptable aux capacités de ligne respectives disponibles et/ou aux exigences, et/ou **en ce que** les k sources de signaux image différentes (17) sont susceptibles d'être sélectionnées par l'étage de commutation (12) en une succession récurrente.

9. Dispositif selon l'une des revendications précédentes,
**caractérisé en ce que**
les périodes temporelles successives, formant le signal vidéo, des différents signaux image Yᵢ présentent des durées temporelles tᵢ différentes les unes des autres ou égales les unes aux autres, en particulier les durées temporelles tᵢ étant comprises entre 15 s et 5 min, en particulier égales à environ 1 min.

10. Dispositif selon la revendication 9,
**caractérisé en ce que**
dans l'étage de mémorisation (5) est prévue une zone tampon (7) dont la taille est de préférence au moins aussi grande que la durée temporelle tᵢ la plus courte, en particulier la taille de la zone tampon (7) est réglable de façon variable en fonction des données de fonctionnement du dispositif (1).

11. Dispositif selon l'une des revendications précédentes,
**caractérisé en ce que**
l'étage de mémorisation (5, 6, 7) est susceptible de fonctionner selon le principe FIFO, et/ou **en ce qu'**il est prévu au moins une entrée de réception supplémentaire (3) qui, en fonctionnement normal et/ou en cas exceptionnels, est susceptible d'être couplée à une source de signaux image (17) via une ligne spécialisée (18), la capacité de transmission de la ligne spécialisée (18) correspondant en particulier au débit binaire de fourniture x.

12. Dispositif selon l'une des revendications précédentes,
**caractérisé en ce que**
il est prévu un étage de déclenchement (12) pour émettre un signal de départ aux sources de signaux image (17) et pour provoquer la prise d'un signal image Y; et/ou pour provoquer la transmission à une entrée de réception (2) d'un signal image Yᵢ pris, en particulier le début de la transmission à l'entrée de réception respective (2) du signal image Yᵢ d'une source de signaux image (17) pouvant être déclenché pendant la prise du signal image Yᵢ qui s'effectue par la source de signaux image (17), ou à la suite.

13. Dispositif selon l'une des revendications précédentes,
**caractérisé en ce que**
il est prévu un étage de commande (14) pour émettre des signaux de commande aux sources de signaux image (17), les signaux de commande comprenant en particulier des valeurs de réglage pour le mouvement, le cadrage de l'image, le diaphragme et/ou le foyer d'une caméra (20) prévue dans la source de signaux image (17).

14. Système comportant un dispositif (1) selon l'une des revendications 1 à 13 et une source de signaux image (17) pour le couplage avec le dispositif (1), comportant
- une caméra (20) fournissant un signal image Yᵢ d'une qualité qui correspond au moins au débit binaire x,
- une mémoire (22) pour mémoriser un signal image Yᵢ de la durée tᵢ,
- un raccord récepteur (24) pour recevoir des signaux de commande, et
- un raccord émetteur (23) pour lire et transmettre un signal image Y; mémorisé à un débit binaire yᵢ inférieur par comparaison au débit binaire x.

15. Système selon la revendication 14,
**caractérisé en ce que**
il est prévu une zone de mémorisation (21) pour des paramètres de fonctionnement de caméra reçus via le raccord récepteur (24), comme par exemple mouvement de la caméra, cadrage de l'image, diaphragme et/ou foyer, et/ou **en ce que** la prise d'un signal image Yᵢ est susceptible d'être déclenchée par la réception d'un signal de commande et/ou dans une trame de temps prédéterminée, et/ou **en ce que** la prise d'un signal image Yᵢ est susceptible d'être déclenchée par un détecteur couplé à la caméra, en particulier par un capteur de lumière, un détecteur de mouvement, une barrière lumineuse, un capteur de température, un anémomètre ou similaire.

16. Système selon l'une des revendications 14 ou 15,
**caractérisé en ce que**
il est prévu un étage de sélection (25) pour établir une liaison vers le dispositif (1), la liaison pouvant être établie en particulier déjà avant la mémorisation complète d'un signal image Y; de la durée tᵢ.

17. Système selon l'une des revendications 14 à 16,
**caractérisé en ce que**
la source de signaux image est susceptible de fonctionner en un mode de réglage dans lequel elle est contrôlable par des signaux de commande provenant du dispositif (1) et dans lequel il peut y avoir une transmission au dispositif (1) des signaux image Yᵢ fournis par la caméra (20), la transmission s'effectuant en particulier à une qualité d'image inférieure à la qualité de signaux de télévision habituels, en particulier à un débit binaire inférieur au débit binaire de fourniture x.
